# EUROPÄISCHE PATENTSCHRIFT

(11) **EP 1 745 968 B1**
(45) Veröffentlichungstag und Bekanntmachung des Hinweises auf die Patenterteilung: **10.08.2011**
(21) Anmeldenummer: 06013071.3
(22) Anmeldetag: 24.06.2006
(51) Int. Cl.: B60K 13/02

(54) **Antriebsaggregat mit Luftfilter für ein Kraftfahrzeug**
Propulsion unit with air filter for motor vehicle
Groupe motopropulseur à filtre à air pour automobile

(30) Priorität: 19.07.2005 DE 102005033659
(43) Veröffentlichungstag der Anmeldung: 24.01.2007
(73) Patentinhaber: Dr. Ing. h.c. F. Porsche AG, 70435 Stuttgart (DE)
(72) Erfinder: Stromsky, Roland-Gerhard, 71691 Freiberg (DE); Storz, Eberhard, 74366 Kirchheim (DE)

(56) Entgegenhaltungen:
- EP-A- 1 515 037
- WO-A-2005/095783
- US-A- 5 152 365
- US-A- 5 564 513

## Beschreibung

Die Erfindung bezieht sich auf ein Antriebsaggregat für ein Kraftfahrzeug nach dem Oberbegriff des Anspruchs 1.

Aus der US 5, 564, 513 ist ein Luftfilterelement für ein Kraftfahrzeug bekannt, das in einem Gehäuse angeordnet ist und oberhalb eines Kühlermoduls am Fahrzeugbug gehalten wird. Des Weiteren ist aus der US-A-5, 152, 365 ,die auch die Merkmale des Oberbegriffs des Anspruchs 1 beinhaltet, ein Antriebsaggregat für ein Schneemobil bekannt, das im Bugraum einen luftdurchströmbaren Luftfilter aufweist, der plattenförmig ausgeführt ist und ober- und unterseitig eine platte Filterfläche aufweist und eine Zuführung von Rohluft von unten her in eine erste Durchströmfläche über einen Luftleitkanal erfolgt und oberseitig des Luftfilters austretende Reinluft aus einer weiteren Filterfläche austritt und weitergeleitet wird. Der Luftfilter ist quer ausgerichtet im Schneemobil angeordnet und mittels eines trägerartigen Segments in diesem gehalten.

Aufgabe der Erfindung ist es, ein Antriebsaggregat für ein Kraftfahrzeug mit einem Luftfilter zu schaffen, der einer optimale Rohluftzuführung ausgesetzt ist, eine Kaltluftanströmung aufweist und in einfacher leichter Bauweise herstellbar und platzsparend im Bugraum des Fahrzeugs anzuordnen ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass der Luftfilter kein eigenes Gehäuse benötigt und somit auch keine Aufteilung in ein Ober- und Unterteil mit zwischen liegendem Filterelement sowie einem Wasserablauf besitzt.

Der Luftfilter nach der Erfindung ist auf einem Träger gehalten im Bugraum des Fahrzeugs angeordnet. Dieser erfindungsgemäße Luftfilter wird erzielt durch ein von mindestens einer Seite luftdurchströmbares Filterelement, das mehrere Durchströmflächen ober-, unter- und stirnseitig aufweist und das Filterelement auf einem trägerartigen Segment gehalten wird und an mindestens einem Luftverteilelement mit angeschlossener Luftführungsleitung versehen ist. Das Luftfilterelement selbst besteht aus einem die anströmende Rohluft filternden Material, wie es auf dem mit Durchströmöffnungen für Reinluft ausgeführten trägerartigen Segment gehalten wird. Durch diese Ausbildung des Luftfilters wird dieser insgesamt gewichtsmäßig leichter und es ist ein größeres Filterelement, d. h., eine größere Durchströmfläche erzielbar und es kann zu den umgrenzenden Wänden der Außenhaut des Fahrzeugs mehr Abstand geschaffen werden. Durch die freiliegende Anordnung des Luftfilters wird eine von allen Seiten verlustfreie Direktanströmung erzielt.

Der Luftfilter ist querliegend im Bugraum des Fahrzeugs - in Fahrtrichtung gesehen - vor dem Motorkühler und oberhalb eines Kühlluftraumes angeordnet und oberseitig durch eine Fahrzeugaußenwand und unterseitig durch ein Kühlluftführungsteil begrenzt. Des Weiteren ist der Kühlluftraum mit angeordnetem Motorkühler abgetrennt zum Bugraum des Luftfilters angeordnet und die Zuführung der Rohluft erfolgt über Luftschlitze oder entsprechende Luftleitrohre oder Schläuche zum Filterelement. Durch die Trennung des Kühlluftraumes bzw. Motorraumes vom vorderen Bugraum für den Luftfilter wird eine günstige Kaltluftanströmung möglich, die für mehr Motorleistung sorgt. Des Weiteren ist durch die Anordnung des Luftfilters getrennt vom Kühlermodul eine direkte Aufheizung der Reinluft bzw. der Prozessluft im Luftfilter durch Wärmestrahlung vom Kühlermodul her unterbunden.

Nach der Erfindung ist der Luftfilter an einem quer im Fahrzeug angeordneten Montageträger befestigt, der den Motorkühler sowie das Luftverteilelement trägt, wobei der Montageträger zwischen dem Luftverteilelement und dem trägerartigen Segment des Filterelements luftdurchlässig ausgeführt ist. In den Montageträger ist einerseits das Luftverteilelement integriert und trägt die Luftführungsleitungen und andererseits kann eine Unterfläche des Montageträgers eine Luftleitfläche für zum Motorkühler gerichtete Kühlluft bilden. Dadurch, dass das Luftfilterelement am vorhandenen Montageträger befestigt wird und nicht aus einem gewichtsmäßig schweren Gehäuse besteht, wird der Vorteil des erfindungsgemäßen Luftfilters darin gesehen, dass eine stabile und schwingungstechnisch entkoppelte Aufhängung bzw. Befestigung, wie bei herkömmlichen Luftfiltern mit Gehäuse nicht erforderlich ist.

Das Filterelement nach der Erfindung kann um das trägerartige Segment bis zum Montageträger hin herumgelegt sein, derart, dass sich eine relativ große luftdurchströmbare Fläche des Filterelements bildet und diese von relativ kleinen seitlich angeordneten Wänden abgeschlossen sind. Insbesondere besteht das Filterelement aus einem Papierfilter oder aus wenigstens einem Schaumstoffelement oder ähnlich wirkenden Werkstoffen, wie Vlies oder Gewebe. Durch diese Ausbildung und Anordnung des Filterelements des Luftfilters erfährt dieser von allen Seiten her eine verlustfreie Direktanströmung und die Luft wird nicht umständlich über Schaufeln und dgl. Luftleiteinrichtung zugeführt. Der Vorteil besteht nach der Erfindung noch darin, dass weniger Gegendruck und somit ein einhergehender Leistungsverlust durch Nutzung des vorhandenen Staudrucks entsteht. Da der Luftfilter im vorderen Bugraum von allen Seiten und zuvor über die Schlitze in der Kühluftführung umgelenkt angeströmt und nicht geradlinig von vorn angeströmt wird, wird sogenanntes Gischtwasser, Flugschnee und sonstige Luftverunreinigungen von dem Luftfilter ferngehalten.

Ein Ausführungsbeispiel der Erfindung ist in den Zeichnungen dargestellt und wird im Folgenden näher beschrieben.
Es zeigen
- Fig. 1: eine schaubildliche Darstellung auf ein Antriebsaggregat im Bugraum des Kraftfahrzeugs mit einem Luftfilter und einem Motorkühler und

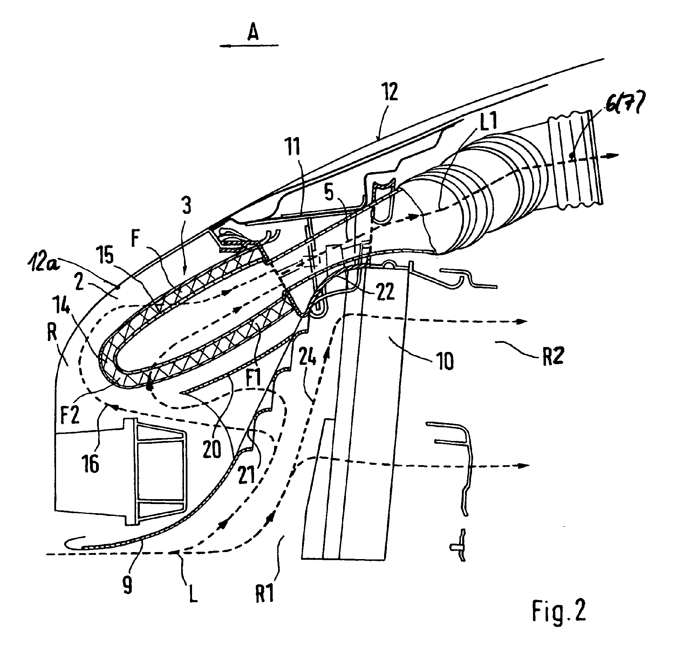

- Fig. 2: einen Schnitt durch den Luftfilter nach der Linie II-II der Fig. 1.

Für ein Antriebsaggregat 1, welches in einem Bugraum 2 bzw. einen Frontmotorraum eines Kraftfahrzeugs angeordnet ist, wird ein Luftfilter 3 für Reinluft L1 verwendet, der mit einem Luftverteilelement 5 verbunden ist und von dem Luftführungsleitungen 6, 7 zum Luftsammelbehälter 8 des Antriebsaggregats 1 geführt sind.

Der Luftfilter 3 ist in einem vom Frontmotorraum abgetrennten vorderen Busraum 12a angeordnet, der zum Kühlluftraum R1 über ein Kühlluftführungsteil 9, wie beispielsweise eine Trennwand 1, abgeschottet ist. Der Luftfilter 3 ist an einem Montageträger 11 im Busraum R bzw. 12a angeordnet gehalten. Räumlich gesehen ist der Luftfilter 3 vor dem Kühler 10 - in Fahrtrichtung A gesehen - angeordnet und erstreckt sich der Fahrzeugaußenhaut 12 folgend im Bugvorderteil. In Bezug auf die Fahrtrichtung A ist ein Motorraum R2 hinter dem Kühler 10 angeordnet.

Der Luftfilter 3 umfasst ein freiliegendes Filterelement 14, welches sich um ein trägerartiges Segment 15, wie ein Korb oder eine Schale, erstreckt, die luftdurchlässig ausgeführt ist. Das Luftfilterelement 14 kann aus einem Vlies, Papier, Gewebe, Schaumlagen oder einem solchen Werkstoff bestehen, der eine Luftfilterung von ankommender Rohluft L zur Reinluft L1 bzw. Prozessluft für den Motor durchführt bzw. ermöglicht.

Das Luftfilterelement 14 ist um das trägerartige Segment 15 anschließend an den Montageträger 11 herumgelegt, derart, dass sich eine relativ große Filterfläche ergibt. Die seitlichen Bereiche 16 und 17 des Luftfilterelements 14 sind durch Wände 18 abgeschlossen. Denkbar wäre aber auch eine erfindungsgemäße Lösung mit dem Abschluss entsprechend der Filterflächen.

Der Luftfilter 3 ist über das trägerartige Segment 15, welches quasi einen Halter bzw. einen Stützkorb darstellt, mit dem Montageträger 11 verbunden, der im Durchströmbereich luftdurchlässig sein muss.

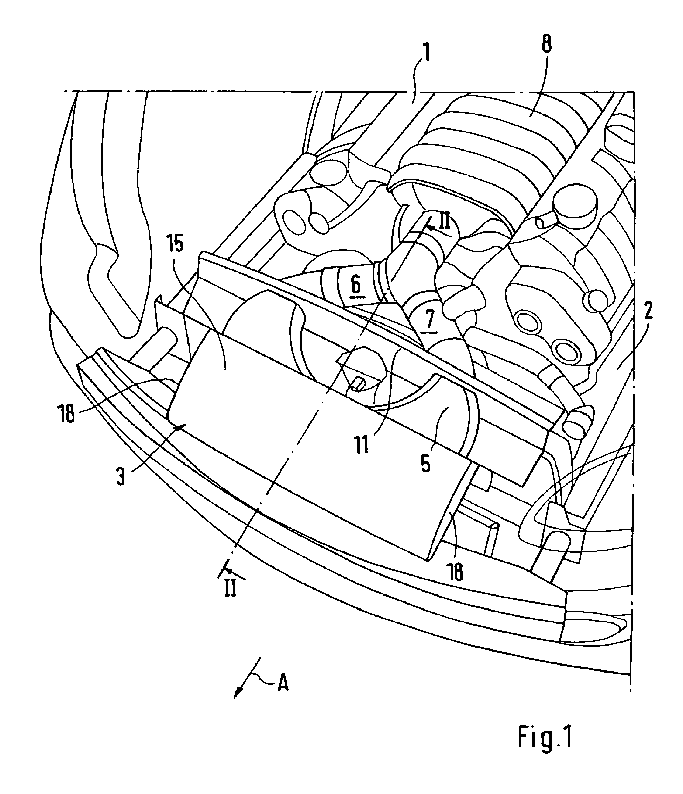

Wie in Fig. 1 näher gezeigt, erstreckt sich der Luftfilter 3 über einen relativ großen Bereich des Fahrzeugbugs 12a in Querrichtung und ist zwischen der Fahrzeugaußenwand 12 und einer Leitfläche 20 bzw. einer Abschirmwand beabstandet zur Trennwand des Kühlluftführungsteils 9 im vorderen Bugraum R angeordnet.

Eine Zuführung von Rohluft L zum Luftfilter 3 erfolgt über Öffnungen im Bug des Fahrzeugs und wird durch Luftschlitze 21 in der Trennwand des Kühlluftführungsteils 9 umgelenkt und dem Luftfilterelement 14 von mehreren Seiten den Filterflächen F, F1 und F2 zugeführt. Die Zuführung der Rohluft L kann auch über Luftschläuche oder sonstige Luftleitungen in der Trennwand erfolgen. Die Rohluft 16 durchströmt das Filterelement 14, wird gereinigt und als Reinluft L1 dem Motoraggregat 1 zugeführt. Die weitere durch die Öffnungen im Bug des Fahrzeugs einströmende Luft wird dem Kühlermodul 10 im Kühlluftraum R1 zugeführt. Der Montageträger 11 kann zur Umlenkung der zugeführten Kühlerluft 24 eine entsprechende Luftleitfläche 22 aufweisen, die auch getrennt zum Montageträger 11 ausgebildet sein kann.

Die Luftzuführungsleitungen 6, 7 bzw. das Luftverteilelement 5 sind im Montageträger 11 eingebettet gehalten.

## Patentansprüche

1. Antriebsaggregat für ein Kraftfahrzeug mit einer quer liegend im Bugraum (2) oder Frontmotorraum des Fahrzeug angeordneten Brennkraftmaschine mit einem Kühlermodul (10) und einem Luftfilter (3) im Bugraum (2) der über Lufteinführungsöffnungen im Fahrzeugbug mit Rohluft (L) versorgt wird, wobei der Luftfilter (3) ein luftdurchströmbares Filterelement (14) umfasst, das aus einem die anströmende Rohluft (L) filterndem Material besteht und das Filterelement (14) auf einem mit Durchströmöffnungen für Reinluft (L1) ausgeführten trägerartigen Segment (15) gehalten ist und an mindestens einem Luftverteilelement (5) mit anschließenden Luftführungsleitungen (6, 7) angeschlossen ist, **dadurch gekennzeichnet, dass** das Filterelement (14) um das trägerartige Segment (15) bis zum Montageträger (11) herumgelegt ist, derart, dass sich eine obere, eine untere und eine frontseitige luftdurchströmbare Fläche (F, F1 und F2) des Filterelements (14) bildet und diese Flächen (F, F1 und F2) von seitlich angeordneten Wänden (18) abgeschlossen sind.

2. Antriebsaggregat nach Anspruch 1, **dadurch gekennzeichnet, dass** der Luftfilter (3) vor dem Motorkühler (10) und oberhalb eines Kühlluftraumes (R1) angeordnet ist und oberseitig durch eine Fahrzeugaußenhaut (12) und unterseitig durch ein Kühlluftführungsteil (9) begrenzt ist.

3. Antriebsaggregat nach den Ansprüchen 1 oder 2, **dadurch gekennzeichnet, dass** der Kühlluftraum (R1) mit angeordnetem Motorkühler (10) abgetrennt zum Bugraum (R) des Luftfilters (3) angeordnet ist und eine Zuführung von Rohluft (L) zum Luftfilter (3) und zum Motorkühler (10) durch Öffnungen im Fahrzeugbug (12a) direkt zum Motorkühler (10) und über das trennende Kühlluftführungsteil (9) in den Motor bzw. Kühlluftraum (R1) erfolgt und durch Luftschlitze (21) im Teil (9) und über ein Abschirmwand (20) zum Filterelement (14) erfolgt.

4. Antriebsaggregat nach einem der Ansprüche 1, 2 oder 3, **dadurch gekennzeichnet, dass** der Luftfilter (3) an einem quer im Fahrzeugbug angeordnetem Montageträger (11) befestigt ist, der das Luftverteilelement (5) trägt, wobei der Montageträger (11) zwischen dem Luftverteilelement (5) und den trägerartigen Segment (15) des Filterelements (14) sowie zwischen dem Luftverteilelement (5) und den Luftführungsleitungen (6, 7) luftdurchlässig ausgeführt ist.

5. Antriebsaggregat nach einem der vorhergehenden Ansprüche, **dadurch gekennzeichnet, dass** in der Trennwand (9) Luftschläuche oder Luftleitungen zur Zuführung von Rohluft (L) angeordnet sind.

6. Antriebsaggregat nach einem der vorhergehenden Ansprüche, **dadurch gekennzeichnet, dass** in den Montageträger (11) einerseits das Luftverteilelement (5) integriert ist und die Luftführungsleitungen (6, 7) trägt und andererseits eine Unterfläche des Montageträgers (11) eine Luftleitfläche (22) für Kühlerluft (24) zum Motorkühler (10) hin bilden kann.

7. Antriebsaggregat nach einem der vorhergehenden Ansprüche, **dadurch gekennzeichnet, dass** das Filterelement (14) aus einem Papierfilter, Flies, Gewebe oder aus wenigstens einem Schaumstoffelement besteht.

## Claims

1. Drive unit for a motor vehicle, having an internal combustion engine which is arranged in a transverse configuration in the front-end compartment (2) or front engine bay of the vehicle and which has a cooler module (10) and an air filter (3) in the front-end compartment (2), to which untreated air (L) is supplied via air inlet openings in the vehicle front end, the air filter (3) comprising a filter element (14) through which air can flow and which is composed of a material which filters the inflowing untreated air (L), and the filter element (14) being held on a carrier-like segment (15) formed with throughflow openings for clean air (L1) and being connected to at least one air distributing element (5) with air guiding lines (6, 7) connected thereto, **characterized in that** the filter element (14) is laid around the carrier-like segment (15) as far as the assembly carrier (11) such that an upper, a lower and a front surface (F, F1 and F2), through which air can flow, of the filter element (14) are formed, and said surfaces (F, F1 and F2) are closed off by laterally arranged walls (18).

2. Drive unit according to Claim 1, **characterized in that** the air filter (3) is arranged in front of the engine cooler (10) and above a cooling air chamber (R1), and is delimited at the top by a vehicle outer skin (12) and at the bottom by a cooling air guiding part (9).

3. Drive unit according to Claims 1 or 2, **characterized in that** the cooling air chamber (R1) with engine cooler (10) arranged therein is arranged so as to be separate from the front-end compartment (R) of the air filter (3), and a supply of untreated air (L) to the air filter (3) and to the engine cooler (10) takes place through openings in the vehicle front end (12a) directly to the engine cooler (10) and via the separating cooling air guiding part (9) into the engine or cooling air chamber (R1), and through air slots (21) in the part (9) and via a shield wall (20) to the filter element (14).

4. Drive unit according to one of Claims 1, 2 or 3, **characterized in that** the air filter (3) is fastened to an assembly member (11) which is arranged transversely in the vehicle front end and which supports the air distributing element (5), the assembly member (11) being formed so as to be permeable to air between the air distributing element (5) and the carrier-like segment (15) of the filter element (14) and between the air distributor element (5) and the air guiding lines (6, 7).

5. Drive unit according to one of the preceding claims, **characterized in that** air hoses or air lines for the supply of untreated air (L) are arranged in the partition (9).

6. Drive unit according to one of the preceding claims, **characterized in that**, firstly, the assembly member (11) has the air distributing element (5) integrated therein and supports the air guiding lines (6, 7), and secondly, a lower surface of the assembly member (11) can form an air guiding surface (22) for cooler air (24) to the engine cooler (10).

7. Drive unit according to one of the preceding claims, **characterized in that** the filter element (14) is composed of a paper filter, nonwoven, fabric or of at least one foamed material element.

## Revendications

1. Groupe motopropulseur pour un véhicule automobile comprenant un moteur à combustion interne disposé transversalement dans l'espace avant (2) ou le compartiment moteur avant du véhicule avec un module de radiateur (10) et un filtre à air (3) dans l'espace avant (2), qui est alimenté en air brut (L) par le biais d'ouvertures d'entrée d'air dans l'avant du véhicule, le filtre à air (3) comprenant un élément de filtre (14) pouvant être traversé par de l'air, qui se compose d'un matériau filtrant l'air brut affluant (L) et l'élément de filtre (14) étant maintenu sur un segment (15) de type support réalisé avec des ouvertures de passage pour de l'air pur (L1) et étant raccordé au niveau d'au moins un élément de distribution d'air (5) à des conduites de guidage d'air rattachées (6, 7), **caractérisé en ce que** l'élément de filtre (14) est placé autour du segment de type support (15) jusqu'au support de montage (11), de telle sorte qu'il se forme une surface supérieure, une surface inférieure et une surface avant (F, F1 et F2) de l'élément de filtre (14) pouvant être traversées par de l'air et ces surfaces (F, F1 et F2) sont terminées par des parois (18) disposées latéralement.

2. Groupe motopropulseur selon la revendication 1, **caractérisé en ce que** le filtre à air (3) est disposé avant le radiateur du moteur (10) et au-dessus d'un espace d'air de refroidissement (R1) et est limité du côté supérieur par un habillage extérieur du véhicule (12) et du côté inférieur par une partie de guidage d'air de refroidissement (9).

3. Groupe motopropulseur selon la revendication 1 ou 2, **caractérisé en ce que** l'espace d'air de refroidissement (R1) est disposé avec le radiateur du moteur (10) en place de manière séparée de l'espace avant (R) du filtre à air (3) et une alimentation en air brut (L) au filtre à air (3) et au radiateur du moteur (10) a lieu à travers des ouvertures dans l'avant du véhicule (12a) directement vers le radiateur du moteur (10) et par le biais de la partie de guidage d'air de refroidissement de séparation (9) dans le moteur ou l'espace d'air de refroidissement (R1), et a lieu par des fentes d'air (21) dans la partie (9) et par le biais d'une paroi de blindage (20) vers l'élément de filtre (14).

4. Groupe motopropulseur selon l'une quelconque des revendications 1, 2 ou 3, **caractérisé en ce que** le filtre à air (3) est fixé sur un support de montage (11) disposé transversalement dans l'avant du véhicule, qui porte l'élément de distribution d'air (5), le support de montage (11) entre l'élément de distribution d'air (5) et le segment de type support (15) de l'élément de filtre (14) et entre l'élément de distribution d'air (5) et les conduites de guidage d'air (6, 7) étant réalisé de manière perméable à l'air.

5. Groupe motopropulseur selon l'une quelconque des revendications précédentes, **caractérisé en ce que** dans la paroi de séparation (9) sont disposés des tubes d'air flexibles ou des conduites d'air pour l'alimentation en air brut (L).

6. Groupe motopropulseur selon l'une quelconque des revendications précédentes, **caractérisé en ce que** dans le support de montage (11) est intégré d'une part, l'élément de distribution d'air (5) qui porte les conduites de guidage d'air (6, 7), et d'autre part une surface inférieure du support de montage (11) peut former une surface de guidage d'air (22) pour acheminer l'air de radiateur (24) au radiateur du moteur (10).

7. Groupe motopropulseur selon l'une quelconque des revendications précédentes, **caractérisé en ce que** l'élément de filtre (14) se compose d'un filtre en papier, d'un non-tissé, d'un tissu ou d'au moins un élément en mousse.
